# EUROPÄISCHE PATENTANMELDUNG

(11) **EP 1 291 119 A1**
(43) Veröffentlichungstag der Anmeldung: **12.03.2003**
(21) Anmeldenummer: 02090248.2
(22) Anmeldetag: 12.07.2002
(51) Int. Cl.: B23K 35/02, B23K 35/40

(54) **Elektrode für Lichtbogenschweissverfahren**

(30) Priorität: 08.09.2001 DE 10144204
(71) Anmelder: HOWALDTSWERKE-DEUTSCHE WERFT AG, 24143 Kiel (DE); W.A. Schweisslegierungs GmbH, 47669 Wachtendonk (DE)
(72) Erfinder: Hinneberg, Dieter, 24568 Kaltenkirchen (DE); Sommer, Jürgen, 21077 Hamburg (DE); Scandella, Jean-Louis, 68320 Holtzwihr (FR)
(74) Vertreter: Köckeritz, Günter

(57) **Zusammenfassung**

Die Erfindung betrifft eine Elektrode für Lichtbogenschweißverfahren, insbesondere eine abschmelzende Draht- oder Fülldrahtelektrode mit speziellen Oberflächenschichten zur Verbesserung der Lichtbogenstabilität bei Schweißverfahren mit abschmelzender Elektrode.

Die erfindungsgemäße Elektrode weist auf der Metalloberfläche eine Schicht aus Oxid, Metalloxid oder einer anderen Sauerstoff enthaltenden Verbindung und/oder einer Sauerstoff oder Kohlendioxid freisetzenden Substanz auf.

## Beschreibung

Die Erfindung betrifft eine Elektrode für Lichtbogenschweißverfahren, insbesondere eine abschmelzende Draht- oder Fülldrahtelektrode mit speziellen Oberflächenschichten zur Verbesserung der Lichtbogenstabilität bei Schweißverfahren mit abschmelzender Elektrode.

Der Einsatz von Sauerstoff, Kohlendioxid oder anderen mit Sauerstoff angelagerten Verbindungen in Elektrodenumhüllungen, in Füllstoffen für Fülldrähte, Schweißpulvern oder Schutzgasen bzw. Schutzgasgemischen spielt bei den Einbrandverhältnissen, bei der Stabilität des Schweißprozesses und in der Schweißmetallurgie eine wichtige Rolle. Weiterhin bekannt ist, dass die Reduzierung der Viskosität der Schmelze und die Verbesserung des Anschmelzverhaltens insbesondere bei höher- und hochlegierten Werkstoffen vielfach über den Einsatz spezieller oxidierender Gasgemische erfolgt. Dabei ist eine exakte Dosierung notwendig, um nachteilige Folgen für die Schweißverbindung zu vermeiden.
Im Rahmen von schweißmetallurgischen Vorsorgemaßnahmen wird im Bedarfsfall der überschüssige Sauerstoff aus dem werkstückseitigen Schmelzbad durch Desoxidationsmittel gebunden und als aufschwimmende Schlacke entfernt.
Derartige Maßnahmen erfordern aber abgestimmte Vorkehrungen und einen höheren Aufwand bei der Gleichgewichtseinstellung bezüglich der Schweißmetallurgie.

Es ist auch bekannt, dass durch Hinzufügen von oxidierenden Gaskomponenten (CO₂, O₂) zum Schutzgas ein stabilisierender Effekt auf den Lichtbogen erreicht wird. Diese Lichtbogenstabilisierung ist für viele spezielle Schweißaufgaben äußerst vorteilhaft, manchmal sogar unverzichtbar.
Der Einsatz oxidierender Gase hat aber den oben schon beschriebenen Nachteil der Sauerstoffübertragung in die Schmelze. Beim Schweißen von rostfreien Stählen kommt es zur Versprödung des Schweißguts und es wird außerdem eine nicht erwünschte, nicht korrosionsbeständige Oxidschicht erzeugt.
Zur Vermeidung dieser Nebenwirkungen sind Mischgase mit reduziertem Kohlendioxid- und Sauerstoffanteil bekannt geworden ( DE 4138835 A 1 ). Die exakte Dosierung so geringer Zusätze ist technisch schwierig und aufwendig.
Der Einsatz von fertigen Gasgemischen dieser Art ist relativ teuer.

Eine weitere Möglichkeit zur Stabilisierung des Schweißlichtbogens ist bei Fülldrähten durch die Zugabe von Pulver in die Füllung möglich, das chemisch Sauerstoff gebunden hat.
Beim Abschmelzen des Fülldrahts wird die Füllung stark erhitzt und der Sauerstoff freigesetzt. Nachteilig an dieser Methode ist, ebenso wie beim Einsatz von Schutzgas, dass Sauerstoff in das Schweißbad übertragen wird.

Die Aufgabe der Erfindung besteht darin, eine Elektrode für Lichtbogenschweißverfahren, insbesondere eine abschmelzende Draht- oder Fülldrahtelektrode zu entwickeln, die einerseits eine Stabilisierung des Lichtbogens ermöglicht und andererseits ein Übergehen von Sauerstoff in das Schmelzbad vermeidet.
Diese Aufgabe wird erfindungsgemäß durch die Merkmale des Anspruchs 1 gelöst. Vorteilhafte Ausgestaltungen der Erfindung sind in den Ansprüchen 2 bis 7 enthalten.

Demnach beinhaltet die Erfindung eine Elektrode nach dem Oberbegriff des Anspruchs 1, die auf der Metalloberfläche eine Schicht aus Oxid, Metalloxid oder einer anderen Sauerstoff enthaltenden Verbindung und/oder einer Sauerstoff oder Kohlendioxid freisetzenden Substanz aufweist.

Nach einem besonderen Merkmal ist die Elektrode eine Massivdraht- oder Fülldrahtelektrode, die auf der Metalloberfläche eine Schicht aus Oxid, Metalloxid oder einer anderen Sauerstoff enthaltende Verbindung mit einer Schichtdicke ≤ 50 µm aufweist. Dadurch wird beim Schweißen die Lichtbogenstabilität insgesamt verbessert und für die Lichtbogenansatzpunkte ein ruhiges, bewegungsarmes Brennen erreicht ohne dabei zusätzlich Sauerstoff in das Schmelzbad einzubringen.

Nach einem bevorzugten Merkmal ist die Elektrode ein Fülldraht ist, deren innere und/oder äußere Oberfläche eine Schicht aus einer Sauerstoff oder Kohlendioxid freisetzenden Substanz mit einer Stärke ≤ 100 µm aufweist. Die Sauerstoff oder Kohlendioxid freisetzenden Substanz besteht nach einem bevorzugten Merkmal aus Kaliumdichromat, Kaliumpermanganat und/oder Metallkarbonat oder einem Gemisch hieraus. Diese setzen beim Schweißen Sauerstoff oder sauerstoffhaltige Verbindungen an der Drahtoberfläche ( innen und/oder außen ) frei, wodurch die Lichtbogenstabilität insgesamt verbessert wird und ruhige, bewegungsarme Lichtbogenansatzpunkte erreicht werden, ohne zusätzlich Sauerstoff in das Schmelzbad einzubringen.
Bei einer Massivdrahtelektrode sind die Schichten auf der
Drahtoberfläche, bei einer Fülldrahtelektrode auf der Rohr- oder Bandoberfläche ( innen und/oder außen ) angelagert.
Durch das Beschichten der Schweißdrähte wird folgender vorteilhafter Effekt erreicht. Beim Abschmelzen des Schweißdrahts brennt der Schweißlichtbogen bevorzugt auf den sauerstoffreichen Oberflächen und wird stabilisiert.
Wenn der Sauerstoff bzw. die Oxide verbraucht sind, würde der Lichtbogen anfangen zu tänzeln und instabil werden.
Durch den kontinuierlichen Drahtvorschub werden dem Schweißlichtbogen aber immer wieder neue sauerstoffreiche oder Sauerstoff abgebende Oberflächen zur Verfügung gestellt, so daß er ständig stabil brennt.
Der Vorteil der so ausgestatteten Schweißdrähte ist, dass die Sauerstoffzufuhr für das jeweilige Material durch die Schichtdicke und
Oxidart vorgegeben ist und zwar nur in den Mengen, die zur Lichtbogenstabilisierung notwendig sind. Beim Übergang des Tropfens in das Schweißbad ist der letzte Sauerstoff verbraucht und es erfolgt nicht die bei der oben beschriebenen Art nachteilige Übertragung von Sauerstoff in das Schweißbad.

Ein besonderer Vorteil der Erfindung besteht darin, dass bei einem Fülldraht z. B. Oxide oder Metalloxide durch die Zusammensetzung und Schichtdicke, aber auch durch die Wahl der Oberfläche auf dem Rohr- oder Falzbandmaterial ( innen und/oder außen ) vorgegeben werden können. Durch Erhitzen des Bandes mittels Plasma- oder WIG- Brenner, gegebenenfalls mit oxidierenden Gasen oder unter Luftsauerstoff, läßt sich in Abstimmung auf die Bandzusammensetzung eine von der Qualität und Schichtdicke vorteilhafte Oxid- oder Metalloxidschicht herstellen.
Soll die Oxidschicht, wegen der möglicherweise negativen Auswirkung auf die Stromübertragung in der Stromkontaktdüse, nur im Inneren aufgebracht werden, kann man die Oxidation auf der Außenfläche vermeiden.
Das läßt sich erreichen durch den lokalen Einsatz von inertem Gas oder Formiergas oder durch das Führen auf geeigneten Unterlagen, die im Temperaturbereich starker Oxidbildung einen Sauerstoffzutritt ganz oder teilweise verhindern.
Geeignete Unterlagen sind z.B. Keramik, Pulver, Sinterpulver oder Sintermetall mit oder ohne Durchströmung von inertem Gas oder Formiergas.
Die andere mögliche Ausführung der Erfindung sind Schweißdrähte mit einer während des Schweißens Sauerstoff oder Kohlendioxid abgebenden Schicht, vorzugsweise auf der Rohrinnenwandung. Eine Beschichtung mit einer Lösung aus Kaliumdichromat oder Kaliumpermanganat, die getaucht, gebürstet oder gespritzt aufgetragen werden kann, wäre z. B. geeignet, dass während des Brennens des Schweißlichtbogens an dem kreisförmigen Mantel des Fülldrahts, infolge der hohen Temperaturen kontinuierlich Sauerstoff abgegeben und die Lichtbogenstabilität deutlich verbessert wird. Reste der Trägerschicht verbrennen im Lichtbogen oder findet man in nicht störenden Schlacken wieder.
Die Eigenschaften derartiger Beschichtungen lassen sich auf die Werkstoffzusammensetzung und Schweißaufgabe abstimmen und beeinflussen durch die Qualität der Metalloxidschicht und die Schichtdicke die Lichtbogenstabilität und das Schweißverhalten.
Bei Verwendung von Karbonaten wie Magnesium- und Strontiumkarbonat würde die oxidierende und ionisierende Wirkung über das Kohlendioxid erreicht, das bei hohen Temperaturen von den Karbonaten abgespalten wird. Eine Verbesserung der Lichtbogenstabilität mittels Oxidschichten oder O₂oder CO₂- abgebender Schichten würde weitere Vorteile bringen.
Durch den Wegfall ( ganz oder teilweise ) von Lichtbogenstabilisatoren in der Füllmenge kann man den Ausbringungsgrad ( Füllgrad) weiter erhöhen oder andere Zulegierungen in der Seele des Fülldrahts vornehmen.

## Patentansprüche

1. Elektrode für Lichtbogenschweißverfahren, **dadurch gekennzeichnet, dass** die Oberfläche der Elektrode eine Schicht aus Oxid, Metalloxid oder anderen Sauerstoff enthaltenden Verbindungen und/oder eine Sauerstoff oder Kohlendioxid freisetzenden Substanz aufweist.

2. Elektrode nach Anspruch 1, **dadurch gekennzeichnet, dass** diese eine Massivdrahtelektrode ist, deren Oberfläche eine Schicht aus Oxid, Metalloxid oder einer anderen Sauerstoff enthaltenden Verbindung mit einer Schichtdicke ≤ 50 µm aufweist.

3. Elektrode nach Anspruch 1, **dadurch gekennzeichnet, dass** diese eine Fülldrahtdrahtelektrode ist, deren Oberfläche eine Schicht aus Oxid, Metalloxid oder einer anderen Sauerstoff enthaltenden Verbindung mit einer Schichtdicke ≤ 50 µm aufweist

4. Elektrode nach Anspruch 1, **dadurch gekennzeichnet, dass** diese eine abschmelzende Fülldrahtelektrode ist, deren innere und/oder äußere Oberfläche eine Schicht aus einer Sauerstoff oder Kohlendioxid freisetzenden Substanz mit einer Stärke ≤ 100 µm aufweist.

5. Elektrode nach Anspruch 1, **dadurch gekennzeichnet, dass** diese eine abschmelzende Massivdrahtelektrode ist, deren innere und/oder äußere Oberfläche eine Schicht aus einer Sauerstoff oder Kohlendioxid freisetzenden Substanz mit einer Stärke ≤ 100 µm aufweist.

6. Elektrode nach einem der obigen Ansprüche, **dadurch gekennzeichnet, dass** die Sauerstoff oder Kohlendioxid freisetzenden Substanz aus Kaliumdichromat, Kaliumpermanganat und/ oder Metallkarbonat oder einem Gemisch hieraus besteht.

7. Elektrode nach einem der o. g. Ansprüche, **dadurch gekennzeichnet, dass**
mit sauerstoffreichem Kupfer oder Kupferoxiden eine Verkupferung erfolgt.
